# EUROPÄISCHE PATENTSCHRIFT

(11) **EP 0 395 631 B1**
(45) Veröffentlichungstag und Bekanntmachung des Hinweises auf die Patenterteilung: **18.01.1995**
(21) Anmeldenummer: 88900688.8
(22) Anmeldetag: 16.11.1987
(51) Int. Cl.: B01J 20/34, B01J 21/20

(54) **VERFAHREN ZUM BEHANDELN VON FLUIDEN MITTELS ADSORPTIONSMITTELN**
PROCESS FOR TREATING FLUIDS BY ADSORPTION MEDIA
PROCEDE DE TRAITEMENT DE FLUIDES PAR DES MILIEUX D'ADSORPTION

(43) Veröffentlichungstag der Anmeldung: 07.11.1990
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.
(86) Internationale Anmeldenummer: EP8700714
(87) Internationale Veröffentlichungsnummer: WO8904715

(56) Entgegenhaltungen:
- EP-A- 0 002 251
- WO-A-85/04347
- WO-A-86/05710
- DE-A- 3 011 023
- DE-A- 3 426 913
- DE-C- 583 240
- FR-A- 944 264
- GB-A- 684 036

## Beschreibung

Bei solchen Verfahren strömt das zu behandelnde Fluid, also eine Flüssigkeit und insbesondere ein Gas oder Gasgemisch, an dem Adsorptionsmittel vorbei, wobei ein oder mehrere bestimmte, in dem Fluid in mehr oder minder geringer Konzentration enthaltene Bestandteile, insbesondere unerwünschte Verunreinigungen, an dem Adsorptionsmittel adsorbiert werden. Hierdurch wird das Adsorptionsmittel zunehmend beladen bis zu einem Punkt, an dem eine weitere Beladung nicht möglich oder wirtschaftlich nicht sinnvoll ist. Dann muß daß Adsorptionsmittel ausgetauscht werden.

Die dem Adsorptionsschritt folgende Regeneration des beladenen Adsorptionsmittels hat zum einen den Zweck, die adsorbierten Bestandteile (Adsorbat) in bezüglich des Fluides höherer Konzentration zu gewinnen, um es dann deponieren oder weiter verarbeiten zu können. Zum anderen wird mit dem Regenerationsschritt in der Regel das Ziel einer Wiederverwendbarkeit des zumeist kostspieligen Adsorptionsmittels verfolgt.

Aus der FR-A-944 264 ist ein Verfahren zum Entfärben von kohlenstoffhaltigen, aber noch nicht carbonisierten Stoffen, insbesondere von flüssigen Kohlenwasserstoffen, bekannt, bei dem als Entfärbungsmittel Partikel aus Ton verwendet werden, auf denen beim Raffinieren flüssiger Kohlenwasserstoffe kohlenstoffhaltiges Material niedergeschlagen wird. Das Tonmaterial ist danach nicht weiter aufnahmefähig und muß behandelt werden. Diese Behandlung besteht in der Carbonisierung des Adsorbates - und zwar in der Gestalt des zuvor auf dem Tonmaterial niedergeschlagenen kohlenstoffhaltigen Materials - bei Temperaturen zwischen 480 und 820°. Durch dieses Carbonisieren werden nichtkohlenstoffhaltige Beimengungen des Niederschlags entfernt und die kohlenstoffhaltigen Bestandteile soweit chemisch umgewandelt, daß ein Depot des carbonisierten Materials auf den Tonpartikeln zurückbleibt, also nicht wiedergewonnen wird. Die dabei erhaltenen, beschichteten Partikel sollen eine noch bessere Entfärbungswirkung als die Tonpartikel selbst aufweisen. Bei diesem bekannten Verfahren wird also das bei dem Entfärbungsprozeß auf den Tonpartikeln niedergeschlagene Material nicht etwa durch einen Regenerationsschritt gewonnen, sondern es wird genutzt, um eine Depotschicht auf den verbrauchten Tonpartikeln zu generieren, also auf den Partikeln eine Schicht aufzubauen - und nicht etwa eine Schicht abzubauen -, um die Partikel erneut wieder zum Entfärben einzusetzen und dabei noch eine verbesserte Entfärbungsleistung zu erzielen.

Ein gattungsgemäßes Behandlungsverfahren ist aus der DE-A-3 011 023 bekannt. Dieses Dokument offenbart einen Rauchgasentschwefelungsprozess, bei dem die drei Hauptreaktionen, Adsorption, Regeneration und chemische Umwandlung, in jeweils einem eigenen Reaktor ablaufen: Die Adsorption von Schwefeldioxyd an einem Adsorptionskoks findet in einer Adsorptionskolonne statt. Für den Desorptionsschritt wird der Adsorptionskoks in eine Desorptionskolonne überführt, in welcher die Desorption bei Temperaturen zwischen 300 und 400 C° erfolgt. Die erforderliche Wärme wird mittels eines inerten Heizgases eingebracht. Das regenerierte Adsorptionsmittel wird einem Klassierer zugeführt, in dem der Abriebanteil des Adsorptionsmittels abgetrennt wird. Der übrige Teil des Adsorptionsmittels wird zur Adsorptionskolonne zum Durchlaufen eines weiteren Adsorptionsschrittes zurückgeführt. Die in der Desorptionskolonne konzentriert freigesetzten Schwefeloxyde werden einem weiteren Reaktor zugeführt, der als Reduktionskolonne ausgebildet und mit frisch erzeugtem Schwelkoks gefüllt ist. Die Reduktionskolonne weist einen äußeren, mantelförmigen Wärmeaustauscher auf und wird durch Verbrennung eines Teils des Schwelkokses auf eine Temperatur von 600 bis 800 C° beheizt. Der in die Reduktionskolonne eingefüllte Schwelkoks wird nach seinem Kontakt mit dem konzentrierten Schwefeldioxyd als Asche verworfen. - Bei diesem bekannten Verfahren werden also die bereits desorbierten Schwefeloxyde in einem weiteren Reaktor über ein Schüttgut geführt, welches an dem im Wechsel zwischen Adsorptionskolonne und Desorptionskolonne durchgeführten Adsorptions-Desorptionsprozess nicht teilnimmt. Bei diesem bekannten Verfahren wird also weder das mit Adsorbat beladene Adsorptionsmittel zum Zwecke der Regeneration pyrolytisch teilabgebaut, noch wird das Adsorbat wärend des Freisetzens im Desorptions- bzw. Regenerationsprozess gleichzeitig an dem Adsorptionsmittel, auf dem es zuvor adsorbiert war, chemisch umgewandelt. Dieses bekannte Verfahren benötigt also eine Reihe von voneinander unabhängigen Partikelströmen, die jeweils eigenständige Förderorgane und Behandlungsmethoden erfordern.

Davon ausgehend liegt der Erfindung die Aufgabe zugrunde, unter Meidung der vorerwähnten Nachteile bei einem gattungsgemäßen Verfahren die Gewinnung des Adsorbates zu vereinfachen.

Diese Aufgabe wird durch das Verfahren mit den Merkmalen des Patentanspruchs 1 gelöst.

Durch die Erfindung wird unter anderem erreicht, daß der Regenerationsschritt auf vergleichsweise einfache Weise durchführbar ist. Durch den pyrolytischen Abbau der Adsorptionsschicht wird das Adsorbat sehr gründlich und schnell ausgetrieben, ohne daß es dabei im Vergleich zu den bekannten Regenerationsverfahren übermäßig verdünnt wird.

Es können auch höhere Kohlenwasserstoffe mitadsorbiert werden, ohne daß dadurch die bekannt ungünstigen Folgen einer irrerversiblen Kontamination des Adsorptionsmittels entstehen; die mitadsorbierten, insbesondere höheren, Kohlenwasserstoffe werden durch Verbrennen auf besonders einfache Weise entfernt und liefern in der Regel einen Beitrag zur Verbrennungswärme.

Überraschenderweise reicht der pyrolytische Abbau der äußeren Teilschichten einer entsprechend dicken Adsorptionsschicht aus, um das Adsorbat hinreichend vollständig auszutreiben. Auf diese Weise kann die Verdünnung des ausgetriebenen Adsorbates (Desorbat) auf ein unumgängliches Mindestmaß beschränkt werden. Das auf diese Weise regenerierte Adsorptionsmittel wird bevorzugt als Katalysator, insbesondere für die NOₓ-Zersetzung verwendet. Überraschenderweise schafft der pyrolytische Teilabbau der Adsorptionsschicht in den innersten Teilschichten der Adsorptionsschicht eine für katalytische Zwecke besonders geeignete Porosität.

Gemäß einer anderen Weiterbildung eignet sich das erfindungsgemäße Verfahren vor allem für die adsorptive Abscheidung von SOₓ, insbesondere von SO₂, aus einem Gasstrom, insbesondere einem Rauchgasstrom, z.B. wie hinter einer Feuerungsanlage für schwefelhaltige Brennstoffe wie Erdöl- oder Kohlenprodukte.

Bei der erfindungsgemäßen Regeneration eines mit einer Schwefelverbindung, z.B. H₂SO₄, beladenen Adsorptionsmittels zersetzt sich beim pyrolytischem Abbau der Adsorptionsschicht das Adsorbat, z.B. die Schwefelsäure, an dem durch die Pyrolyse heißen Kohlenstoff der Adsorptionsschicht, der eine Reduktion des Adsorbates, z.B. zu SO₂ bewirkt. Das Adsorbat wird also beim Regenerationsschritt nicht nur konzentriert freigesetzt, sondern es wird gleichzeitig chemisch umgewandelt, so daß ein besonderer Umwandlungsschritt entfallen kann. Das konzentriert anfallende, chemisch bereits umgewandelte Adsorbat kann dann in bekannter Weise weiterbehandelt werden, z.B. zu elementarem Schwefel oder H₂S. Der Kohlenstoff der Adsorptionsschicht erfüllt also drei Aufgaben, nämlich ein Adsorptionsmittel zu schaffen, als Energiequelle zur Erzeugung der für das Austreiben des Adsorbates erforderlichen Temperatur zu dienen und darüberhinaus als Reduktionsmittel für das Adsorbat zu dienen.

Gemäß einer anderen Weiterbildung wird für das erfindunggemäße Verfahren bevorzugt ein Adsorptionsmittel verwendet, dessen Adsorptionsschicht aus Kohlenstaub und einem Bindemittel insbesondere einem kohlenstoffhaltigen Bindemittel, wie Teer, Pech oder dergleichen besteht.

Als Bindemittel können u.a. auch anorganische Verbindungen, wie z.B. Silkonharz verwendet werden. Außer dem Kohlenstaub und dem Bindemittel können weitere Zusätze für den Aufbau der Adsorptionsschicht mitverwendet werden, insbesondere ein Dispersionsmittel, insbesondere Wasser, oder katalytisch wirkendes Material.

Als besonders vorteilhaft hat sich die Verwendung gemahlener Kraftwerkskohle als Kohlenstaub erwiesen. Diese braucht keine aufwendigen Weitervermahlung zu einem besonders feinteiligen oder gar windgesichteten, oder durch Klassierschritte auf bestimmte Teilchengrößen eingestellten Produkt weiterverarbeitet zu werden, wie es z.B. für die Herstellung von Aktivkohlen oder Kohlstoffmolekularsieben erforderlich ist. Besonders bevorzugt wird als kohlenstoffhaltiges Material der Adsorptionsschicht die gleiche gemahlene Kohle verwendet, deren in einem Pyrolyseprozeß entstehendes Rauchgas durch das Adsorptionsmittel behandelt werden soll. Bei erfindungsgemäßer Verwendung von Kraftwerkskohle, insbesondere mit relativ hohem Aschegehalt, ist eine vollständige oder teilweise Entfernung der anorganischen Bestandteile, insbesondere der Asche, von Vorteil. Kraftwerkskohle ist in der Regel auf eine Körnung von 90 % < 90µ m aufgemahlen. Für die Erfindungsgemäße Verwendung kommt auch eine zusätzliche Fraktionierung derart in Betracht, daß die feine Kornfraktion für das Adsorptionsmittel und die gröbere Fraktion im Kraftwerk mit verbrannt wird. Auf diese Weise wird es möglich, in einem Kraftwerk selbst, mit aus dem Kraftwerksprozeß stammenden Materialien eine Rauchgas-Entschwefelung sowie die Entfernung von Stickoxyden aus dem Rauchgas vorzunehmen; dabei entstehen keine schwer verarbeitbaren oder schwer deponierbaren Rückstände wie Gips oder dergleichen. Im übrigen hat sich gezeigt, daß die erfindungsgemäß bevorzugt verwendeten Adsorptionsmittel und ihr Herstellungsverfahren sowie ihre Behandlung im Kontaminationsfalle auch für andere Prozesse, wie Katalyseprozessen sowohl wirtschaftlich als auch technisch besonders geeignet sind.

Die vorgenannten, erfindungsgemäßen Verfahrensschritte und Einsatzstoffe unterliegen in ihren Verfahrensbedingungen, ihrer Materialauswahl und ihrer technischen Konzeption keinen besonderen Ausnahmebedingungen, so daß die in dem jeweiligen Anwendungsgebiet bekannten Auswahlkriterien uneingeschränkt Anwendung finden können.

## Patentansprüche

1. Verfahren zum Behandeln von Fluiden, zumindest bestehend aus einem Adsorptionsschritt, einem dem Adsorptionsschritt nachfolgenden Regenerationsschritt und einer chemischen Umwandlung des Adsorbates, bei dem
a) in dem Adsorptionsschritt Bestandteile des Fluids mittels eines Adsorptionsmittels aus einem Fluidstrom zurückgehalten werden,
b) in dem Regenerationsschritt zumindest ein Teil der von dem Adsorptionsmittel zurückgehaltenen Bestandteile des Fluids (Adsorbat) freigesetzt und ggf. gewonnen wird,
c) das Adsorptionsmittel aus Partikeln besteht, bei denen eine äußere Schicht als Adsorptionsschicht dient und die Adsorptionsschicht aus kohlenstoffhaltigem Material besteht, und
d) das Adsorbat an erhitztem Kohlenstoff chemisch umgewandelt wird,
**dadurch gekennzeichnet**,
daß das Adsorbat im Regenerationsschritt chemisch umgewandelt wird und das Freisetzen und chemische Umwandeln des Adsorbates (im Regenerationsschritt) dadurch erfolgt, daß das kohlenstoffhaltige Material der Adsorptionsschicht des Adsorptionsmittels pyrolytisch abgebaut wird.

2. Verfahren nach Anspruch 1, dadurch gekennzeichnet, daß das regenerierte Adsorptionsmittel als Katalysator verwendet wird.

3. Verfahren nach Anspruch 2, gekennzeichnet durch die Verwendung des Adsorptionsmittels als Katalysator für die NOₓ-Zersetzung.

4. Verfahren nach einem der Ansprüche 1 bis 3, gekennzeichnet durch die adsorptive Abscheidung von SOₓ aus einem Gasstrom.

5. Verfahren nach einem der Ansprüche 1 bis 4, gekennzeichnet durch die Verwendung eines Adsorptionsmittels, bei dem die Adsorptionsschicht aus Kohlenstaub und einem Bindemittel besteht.

6. Verfahren nach Anspruch 5, dadurch gekennzeichnet, daß der Kohlenstaub aus gemahlener Kraftwerkskohle besteht.

7. Verfahren nach Anspruch 5 oder 6, dadurch gekennzeichnet, daß der Kohlenstaub thermisch vorbehandelt ist.

8. Verfahren nach einem der Ansprüche 5 bis 7, dadurch gekennzeichnet, daß das Bindemittel kohlenstoffhaltig ist.

9. Verfahren nach einem der Ansprüche 5 bis 8, dadurch gekennnzeichnet, daß die Adsorptionsschicht thermisch behandelt ist.

10. Verfahren nach einem der Ansprüche 1 bis 9, dadurch gekennzeichnet, daß der pyrolytische Abbau der Adsorptionsschicht durch autothermes Verbrennen des im Adsorptionsmittel enthaltenen Kohlenstoffs erfolgt.

## Claims

1. A process for the treatment of fluids, at least comprising an adsorption step, a regeneration step succeeding the adsorption step and a chemical conversion of the adsorbate, wherein
a) in the adsorption step, constituents of the fluid are withheld from a fluid stream by means of an adsorbent,
b) in the regeneration step, at least part of the fluid constituents (adsorbate) withheld by the adsorbent is released and, optionally, recovered,
c) the adsorbent comprises particles having an outer layer serving as an adsorption layer, and the adsorption layer comprises carbon-containing material, and
d) the adsorbate is chemically converted on heated carbon,
characterised in that the adsorbate is chemically converted in the regeneration step, and the release and chemical conversion of the adsorbate (in the regeneration step) takes place as a result of the carbon-containing material of the adsorption layer of the adsorbent being pyrolytically decomposed.

2. A process according to claim 1, characterised in that the regenerated adsorbent is used as a catalyst.

3. A process according to claim 2, characterised by the use of the adsorbent as a catalyst for NOₓ decomposition.

4. A process according to any one of claims 1 to 3, characterised by the adsorptive separation of SOₓ from a gas stream.

5. A process according to any one of claims 1 to 4, characterised by the use of an adsorbent, the adsorption layer of which comprises coal dust and a bonding agent.

6. A process according to claim 5, characterised in that the coal dust comprises ground power station coal.

7. A process according to claim 5 or 6, characterised in that the coal dust is thermally pretreated.

8. A process according to any one of claims 5 to 7, characterised in that the bonding agent contains carbon.

9. A process according to any one of claims 5 to 8, characterised in that the adsorption layer is thermally treated.

10. A process according to any one of claims 1 to 9, characterised in that the pyrolytic decomposition of the adsorption layer takes place as a result of autothermic combustion of the carbon contained in the adsorbent.

## Revendications

1. Procédé pour le traitement de fluides, se composant au moins d'une étape d'adsorption, d'une étape de régénération suivant l'étape d'adsorption et d'une transformation chimique de l'adsorbat, où
a) dans l'étape d'adsorption, des composants du fluide sont retenus hors d'un courant de fluide au moyen d'un agent d'adsorption,
b) dans l'étape de régénération au moins une partie des composants du fluide (adsorbat) retenus par l'agent d'adsorption est libérée et éventuellement extraite,
c) l'agent d'adsorption se compose de particules dont la couche externe sert de couche d'adsorption et la couche d'adsorption se compose de matière carbonée, et
d) l'adsorbat est transformé chimiquement par chauffage du carbone,
caractérisé en ce que,
l'adsorbat est transformé chimiquement dans l'étape de régénération et la libération ainsi que la transformation chimique de l'adsorbat (dans l'étape de régénération) s'effectuent par le fait que la matière carbonée de la couche d'adsorption de l'agent d'adsorption est dégradée par pyrolyse.

2. Procédé selon la revendication 1, caractérisé en ce que l'agent d'adsorption régénéré est utilisé comme catalyseur.

3. Procédé selon la revendication 2, caractérisé par l'utilisation de l'agent d'adsorption en tant que catalyseur pour la décomposition de NOₓ.

4. Procédé selon l'une des revendications 1 à 3, caractérisé par la séparation adsorbante de SOₓ d'un courant de gaz.

5. Procédé selon l'une des revendications 1 à 4, caractérisé par l'utilisation d'un agent d'adsorption, où la couche d'adsorption se compose de poussière de charbon et d'un agent de liaison.

6. Procédé selon la revendication 5, caractérisé en ce que la poussière de charbon se compose de charbon pulvérisé provenant de centrales électriques.

7. Procédé selon la revendication 5 ou 6, caractérisé en ce que la poussière de charbon est prétraitée thermiquement.

8. Procédé selon l'une des revendications 5 à 7, caractérisé en ce que l'agent de liaison est carboné.

9. Procédé selon l'une des revendications 5 à 8, caractérisé en ce que la couche d'adsorption est traitée thermiquement.

10. Procédé selon l'une des revendications 1 à 9, caractérisé en ce que la dégradation par pyrolyse de la couche d'adsorption s'effectue par carbonisation autothermique du carbone contenu dans l'agent d'adsorption.
